# EUROPEAN PATENT SPECIFICATION

(11) **EP 2 235 335 B1**
(45) Date of publication and mention of the grant of the patent: **21.09.2011**
(21) Application number: 07870465.7
(22) Date of filing: 21.12.2007
(51) Int. Cl.: F01N 13/14

(54) **THERMAL ENERGY CONTAINING ARRANGEMENT FOR AN EXHAUST GAS PURIFICATION DEVICE**
WÄRMEENERGIE ENTHALTENDE ANORDNUNG FÜR EINE ABGASREINIGUNGSVORRICHTUNG
AGENCEMENT CONTENANT DE L'ÉNERGIE THERMIQUE POUR UN DISPOSITIF DE PURIFICATION DE GAZ D'ÉCHAPPEMENT

(43) Date of publication of application: 06.10.2010
(73) Proprietor: Renault Trucks, 69800 Saint Priest (FR)
(72) Inventor: VANVOLSEM, Michel, 38110 Montagnieu le Bas (FR); VONARB, Régis, 1630 Bulle (CH)
(74) Representative: Putet, Gilles
(86) International application number: PCT/IB2007/004441
(87) International publication number: WO 2009/081231

(56) References cited:
- EP-A- 0 596 854
- DE-A1-102005 031 068

## Description

### Field of the invention

The invention concerns a thermal energy containing arrangement for an exhaust gas purification device.

### Technological background

Environmental legislations require that any vehicle propelled by an internal combustion engine treat exhaust gas to reduce the level of toxicity of the emissions. To this end, vehicles are fitted with after treatment equipment such as catalytic converters and diesel particulates filters (DPF) for diesel engines.

A catalytic converter is an exhaust gas purification device that can be found on an exhaust line. In the catalytic converter, takes place an oxidation/reduction reaction that reduces undesirable emissions of hydrocarbon (HC) and/or carbon monoxide (CO) and/or nitrogen oxide (NOx).

To operate efficiently, a catalytic converter has to operate within a high temperature range that can be in an area of 200°C/400°C as the catalytic conversion of pollutant requires thermal energy. This temperature range is a necessary condition for an efficient oxidation/reduction reaction. This range of temperature is only achieved when an engine has been running for a certain amount of time; after this amount of time, the engine reaches its operating temperature where the exhaust gas are emitted at a high temperature that allows an efficient operation of the catalytic converter.

A diesel particulate filter regenerates unburnt particulates that are found in exhaust gas. Polluting particulates are collected in a filter and, thus, are not rejected into the atmosphere. In a process known as filter regeneration, accumulated particulates are burnt when the filter load reaches a predetermined level. For the filter regeneration operation, the filter can be heated at a temperature leading to combustion of the particulates within a high temperature range of 500°C/650°C. There again, when an engine is not running at a sufficiently high temperature, filter regeneration may not be complete or may require additional thermal energy.

It is apparent that thermal energy is a critical parameter for an efficient purification treatment of exhaust gas.

Having said that, it should be taken into account that urban driving conditions, usually involve a number of short journeys. Short journeys may not permit an engine to reach a temperature high enough for an efficient operation of the exhaust gas purification device.

Furthermore, the case of the so called hybrid vehicles should be considered; this type of vehicles which combine an internal combustion engine and one or more electric motors powered by rechargeable batteries. In the normal operative mode of a hybrid vehicle, the internal combustion engine can be turned off when the vehicle is coasting, braking or stopped (for example, when the vehicle is idling at a traffic light or in traffic congestion) and the engine can be restarted when propulsion is needed. Although this type of vehicles has an impact on the environment that is more favourable than the impact of a conventional vehicle, the amount of times the engine switches off and on may be detrimental for an efficient operation of the depollutionng equipment that cleanses the exhaust gas rejected by the internal combustion engine as high exhaust gas temperatures will never be reached.

It therefore appears that there is room for improvement in the field of exhaust gas purification device.

### Summary of the invention

In this technical context, an object of the Invention is to provide an arrangement for an exhaust gas purification device that can offer a better use of the thermal energy generated by an internal combustion engine.

This object and others are achieved by a thermal energy containment arrangement for an exhaust gas purification device incorporated in an exhaust line of an internal combustion engine, the purification device having an inlet port through which exhaust gas from the internal combustion engine can flow in and an outlet port through which the treated exhaust gas can flow out. Said arrangement includes a retractable upstream thermal energy containing means located upstream of the purification device and a retractable downstream thermal energy containing means located downstream of the purification device and an actuating means for controlling the position of the said upstream thermal energy containing means and of the said downstream thermal energy containing means within regard to respectively the inlet port and the outlet port of the purification device, the upstream thermal energy containing means and the downstream thermal energy containing means being movable between (i) an engine running position wherein the upstream thermal energy containing means and the downstream thermal energy containing means are in an, at least partially, retracted position and allow the flow of exhaust gas in and out of the depolluting means and (ii) a thermal energy preserving position wherein at least one of the upstream thermal energy containing means and of the downstream thermal energy containing means shut off respectively the inlet port and outlet port of the purification device. Such an arrangement is shown in DE-10.2005.031.068

According to the invention the arrangement makes it possible to restrict the inlet and outlet port of the catalytic converter so that the flow of exhaust gases can be focused on a restricted section of the catalytic converter.

Thus, the invention provides an arrangement that makes it possible to partially or entirely isolate an exhaust gas purification device. Therefore, the arrangement according to the invention makes it possible, when an internal combustion engine is turned off, to maintain the thermal energy that has been stored into the purification device while the internal combustion engine was in operation. Unlike a conventional exhaust line wherein the thermal energy that is stored in a purification device starts dissipating as soon as the internal combustion engine is turned off, the arrangement of the invention makes it possible to maintain the temperature of the purification device. In this way, as soon as the engine restarts, the purification device can Immediately resume operation as the purification device is at a temperature level that authorizes an efficient purification treatment.

If the arrangement according to the invention brings a substantial advantage to any vehicle powered by an internal combustion engine, it can be pointed out that the arrangement according to the invention can be successfully implemented on a hybrid vehicle. The normal operating mode of a hybrid vehicle, especially in urban driving conditions, involves repetitive cycles wherein the internal combustion engine is stopped whenever the internal combustion engine is not needed or when the electric motor suffices to propel the vehicle.

Thanks to the arrangement according to the invention, the exhaust emissions that are generated during internal combustion operation can be treated more efficiently when the internal combustion engine resumes operation, as the purification device has kept part or all of the thermal energy that was previously stored.

In an embodiment of the invention, one of the upstream thermal energy containing means and of the downstream thermal energy containing means can include a circular frame that supports a series of rotatable blades arranged in an iris diaphragm fashion that can close off at least partially the inlet and outlet ports of the purification device. The frame supporting the rotatable blades can advantageously be engaged in one of the inlet or outlet ports. Thus, in this embodiment, the thermal energy containing means can be entirely integrated within the inlet and outlet ports of the purification device without disturbing the exhaust flow.

In another embodiment of the invention, one of the upstream thermal energy containing means and of the downstream thermal energy includes a rotating plate having a series of apertures of growing diameter and at least one solid sector having a surface at least equal to the section of the exhaust gas purification device, the said rotating plate being angularly positioned between (i) an engine operating position whereby one of the apertures coincides with one of the inlet or outlet ports and (ii) a thermal energy preserving position whereby the at least one solid sector covers one of the inlet or outlet port of the purification device.

In another embodiment of the invention, the thermal energy containing means can be in the shape of a shutter; in this embodiment, one of the upstream thermal energy containing means and of the downstream thermal energy can include a solid plate having a surface at least equal to the section of the exhaust gas purification device; the solid plate can be transversally moved between (i) an engine operating position whereby the solid plate is in a retracted position and at least partially opens one of the inlet or outlet ports and (ii) a thermal energy preserving position whereby the solid plate covers one of the inlet or outlet port of the purification device.

So as to provide substantial insulation when the arrangement is in thermal preserving mode, the thermal energy containing means can be comprised of a metal core coated with a ceramic layer or any other type of material resisting at high temperatures, up till 800 °C and having efficient insulating properties.

Depending on a vehicle type, the exhaust gas purification device can be a catalytic converter or a diesel particulate filter.

### Brief description of the drawings

Fig. 1 is a longitudinal section of an arrangement according to the invention,
Fig. 2 shows an embodiment of thermal energy containing means that are fitted at each end of a purification device.

### Description of the invention

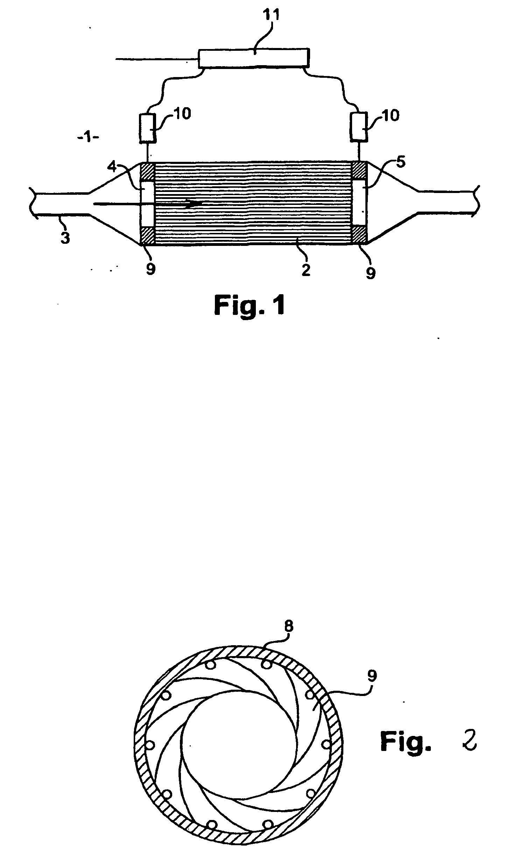

Fig. 1 shows a purification device that can be, for example, a catalytic converter 2 that is located on the exhaust line 3 of an internal combustion engine (not shown). The catalytic converter 2 has (i) an inlet port 4 through which untreated exhaust gas can flow in and (ii) an outlet port 5 through which treated exhaust gas can be released into the atmosphere.

In a known per se manner, the catalytic converter 2 reduces the toxicity of the exhaust gas emitted by an internal combustion engine.

As explained above, the catalytic converter 2 has to operate at high temperatures so that the oxidation/reduction reaction can effectively reduce undesirable emissions of pollutants.

Thus, the invention makes provision for an arrangement 1 that can, in effect, contain the thermal energy that is stored in the catalytic converter 2.

The arrangement 1 includes thermal containment means that are located at each end of the catalytic converter 2. In other words, the inlet port 4 and the outlet port 5 are both concerned with the arrangement 1 according to the invention.

Fig. 2 shows a further embodiment of the thermal containment means. In this embodiment of the invention, a circular frame 8 can be provided at one or at both ends of the catalytic converter 2. The circular frame 8 supports a series of rotatable blades 9 arranged in an iris diaphragm fashion that can close off partially or entirely the catalytic converter inlet and outlet ports 4 and 5.

The rotatable blades 9 can be made of a metallic core covered by a ceramic coating so as to provide significant insulating capability.

Each insulated rotatable blade 9 can be driven by actuating means that can be comprised of a pneumatic, electric or hydraulic actuator 10. Via, for example, a vehicle CAN bus, the actuator 10 can be controlled by a vehicle controller 11 that, for example, includes a CPU, a RAM and a ROM.

Depending on the vehicle controller action on the actuating means, each thermal energy containing rotatable blade 9 can have a transversal motion with respect to the flow of exhaust gas. Thus, each thermal energy containing rotatable blade 9 can move between a retracted position and a thermal containing position wherein the said blade transversally covers the inlet port or the outlet port of the catalytic converter 2 and contains the thermal energy that can be stored in the catalytic converter 2 from an earlier engine operation.

Importantly, the arrangement of the invention makes it possible to shut off both ends of the catalytic converter. The thermal energy containing rotatable blades 9 move into the thermal containing position as soon as the internal combustion engine is turned off. When the internal combustion engine is turned on, the thermal energy containing plates 9 move into the retracted position and allow the flow of exhaust gas to enter the catalytic converter.

As thermal energy is maintained in the catalytic converter 2, the catalytic converter 2 can resume operation without the usual phase of warming up where the catalytic converter does not operate efficiently.

Further, the arrangement according to the invention makes it possible to adapt the section of the catalytic converter that can be used to treat exhaust gas.

When the engine starts operation, the catalytic converter cannot instantaneously reach a required operational temperature which allows an efficient treatment of the exhaust gas. The arrangement of the invention makes it possible to restrict the inlet port and outlet port of the catalytic converter. Thus, the flow of exhaust gas can be focused on a restricted section of the catalytic converter which can quickly reach the required operational temperature. The thermal containment means can then be fully retracted when the temperature in the catalytic converter reaches the required efficiency.

The invention is not limited to the illustrative embodiments described above and shown in the drawings, but can be varied within the scope of the following claims. The thermal energy containment means can be a throttle, a diaphragm, a shutter or any other shutting system.

## Claims

1. A thermal energy containing arrangement (1) for an exhaust gas purification device incorporated in an exhaust line (3) of an internal combustion engine, the purification device having an inlet port (4) through which exhaust gas from the internal combustion engine can flow in and an outlet port (5) through which the treated exhaust gas can flow out, wherein said arrangement includes a retractable upstream thermal energy containing means located upstream the purification device and a retractable downstream thermal energy containing means located downstream the purification device and an actuating means for controlling the position of the said upstream thermal energy containing means and of the said downstream thermal energy containing means within regard to respectively the inlet port (4) and the outlet port (5) of the purification device, the upstream thermal energy containing means and the downstream thermal energy containing means being movable between (i) an engine operating position wherein the upstream thermal energy containing means and the downstream thermal energy containing means are in an at least partially retracted position and allow the flow of exhaust gas in and out of the exhaust gas purification device and (ii) a thermal energy preserving position wherein at least one of the upstream thermal energy containing means and of the downstream thermal energy containing means shut off respectively the inlet port and outlet port of the purification device,
**characterized in that** the arrangement makes it possible to restrict the inlet and outlet port of the catalytic converter so that the flow of exhaust gases can be focused on a restricted section of the catalytic converter.

2. The arrangement according to claim 1, **characterized in that** one of the upstream thermal energy containing means and of the downstream thermal energy containing means includes a circular frame (8) that supports a series of rotatable blades (9) arranged in an iris diaphragm fashion that can close off at least partially the inlet and outlet ports of the purification device.

3. The arrangement according to claim 2, **characterized in that** the frame (8) supporting the rotatable blades (9) is engaged in one of the inlet or outlet ports (4, 5).

4. The arrangement according to one of claims 1 to 3, **characterized in that** one of the upstream thermal energy containing means and of the downstream thermal energy containing means includes a rotating plate having a series of apertures of growing diameter and at least one solid sector having a surface at least equal to the section of the exhaust gas purification device, the said rotating plate being angularly positioned between (i) an engine operating position whereby one of the apertures coincides with one of the inlet or outlet ports and (ii) a thermal energy preserving position whereby the at least one solid sector covers one of the inlet or outlet port of the purification device.

5. The arrangement according to one of claims 1 to 4, **characterized in that** one of the upstream thermal I energy containing means and of the downstream thermal energy containing means includes a solid plate having a surface at least equal-to the section of the exhaust gas purification device, the solid plate being transversally movable between (i) an engine operating position whereby the solid plate is in a retracted position and at least partially opens one of the inlet or outlet ports and (ii) a thermal energy preserving position whereby the solid plate covers one of the inlet or outlet port of the purification device.

6. The arrangement according to one of claims 1 to 5, **characterized in that** the thermal energy containing means are comprised of a metal core coated with a ceramic layer.

7. The arrangement according to one of claims 1 to 6, **characterized in that** the exhaust gas purification device includes a catatytic converter.

8. The arrangement according to one of claims 1 to 7, **characterized in that** the exhaust gas purification device includes a diesel particle filter.

## Patentansprüche

1. Wärmeenergie enthaltende Einrichtung (1) für eine Abgasreinigungsvorrichtung, die in einer Abgasleitung (3) eines Verbrennungsmotors untergebracht ist, wobei die Reinigungsvorrichtung einen Einlasskanal (4), durch den Abgas von dem Verbrennungsmotor einströmen kann, und einen Auslasskanal (5) aufweist, durch den das behandelte Abgas ausströmen kann, wobei die Einrichtung eine zurückziehbare stromaufwärtige Wärmeenergie enthaltende Einrichtung, die stromaufwärts der Reinigungsvorrichtung angeordnet ist, und eine zurückziehbare stromabwärtige Wärmeenergie enthaltende Einrichtung, die stromabwärts der Reinigungsvorrichtung angeordnet ist, und eine Betätigungseinrichtung zur Steuerung der Position der stromaufwärtigen Wärmeenergie enthaltenden Einrichtung und der stromabwärtigen Wärmeenergie enthaltenden Einrichtung bezüglich des Einlasskanals (4) bzw. des Auslasskanals (5) der Reinigungsvorrichtung umfasst, wobei die stromaufwärtige Wärmeenergie enthaltende Einrichtung und die stromabwärtige Wärmeenergie enthaltende Einrichtung zwischen (i) einer Motorbetriebsposition, in der sich die stromaufwärtige Wärmeenergie enthaltende Einrichtung und die stromabwärtige Wärmeenergie enthaltende Einrichtung in einer wenigstens teilweise zurückgezogenen Position befinden und die Strömung von Abgas in die und aus der Abgasreinigungsvorrichtung ermöglichen, und (ii) einer Wärmeenergieerhaltungsposition bewegbar sind, in der wenigstens eine der stromaufwärtigen Wärmeenergie enthaltenden Einrichtung und der stromabwärtigen Wärmeenergie enthaltenden Einrichtung den Einlasskanal bzw. den Auslasskanal der Reinigungsvorrichtung absperren,
**dadurch gekennzeichnet, dass** die Einrichtung es ermöglicht, den Einlass- und Auslasskanal des Katalysators so zu verengen, dass die Strömung von Abgasen auf einen begrenzten Abschnitt des Katalysators fokussiert werden kann.

2. Einrichtung nach Anspruch 1, **dadurch gekennzeichnet, dass** eine der stromaufwärtigen Wärmeenergie enthaltenden Einrichtung und der stromabwärtigen Wärmeenergie enthaltenden Einrichtung einen kreisförmigen Rahmen (8) aufweist, der eine Reihe von drehbaren Flügeln (9) trägt, die in Art einer Irismembrane angeordnet sind und den Einlass- und den Auslasskanal der Reinigungsvorrichtung wenigstens teilweise schließen können.

3. Einrichtung nach Anspruch 2, **dadurch gekennzeichnet, dass** der die drehbaren Flügel (9) tragende Rahmen (8) in den Einlass- oder Auslasskanal (4, 5) eingreift.

4. Einrichtung nach einem der Ansprüche 1 bis 3, **dadurch gekennzeichnet, dass** eine der stromaufwärtigen Wärmeenergie enthaltenden Einrichtung und der stromabwärtigen Wärmeenergie enthaltenden Einrichtung eine Drehplatte aufweist, die eine Reihe von Öffnungen wachsenden Durchmessers und wenigstens einen massiven Sektor mit einer Fläche aufweist, die wenigstens gleich dem Querschnitt der Abgasreinigungsvorrichtung ist, wobei die Drehplatte im Winkel zwischen (i) einer Motorbetriebsposition, in der eine der Öffnungen mit dem Einlass- oder dem Auslasskanal übereinstimmt, und (ii) einer Wärmeenergieerhaltungsposition positioniert wird, in der der wenigstens eine massive Sektor den Einlass- oder den Auslasskanal der Reinigungsvorrichtung abdeckt.

5. Einrichtung nach einem der Ansprüche 1 bis 4, **dadurch gekennzeichnet, dass** eine der stromaufwärtigen Wärmeenergie enthaltenden Einrichtung und der stromabwärtigen Wärmeenergie enthaltenden Einrichtung eine massive Platte mit einer Fläche aufweist, die wenigstens gleich dem Querschnitt der Abgasreinigungsvorrichtung ist, wobei die massive Platte in Querrichtung zwischen zwischen (i) einer Motorbetriebsposition, in der sich die massive Platte in einer zurückgezogenen Position befindet und den Einlass- oder den Auslasskanal wenigstens teilweise öffnet, und (ii) einer Wärmeenergieerhaltungsposition bewegbar ist, in der die massive Platte den Einlass- oder den Auslasskanal der Reinigungsvorrichtung abdeckt.

6. Einrichtung nach einem der Ansprüche 1 bis 5, **dadurch gekennzeichnet, dass** die Wärmeenergie enthaltenden Einrichtungen einen Metallkern umfassen, der mit einer Keramikschicht beschichtet ist.

7. Einrichtung nach einem der Ansprüche 1 bis 6, **dadurch gekennzeichnet, dass** die Abgasreinigungsvorrichtung einen Katalysator umfasst.

8. Einrichtung nach einem der Ansprüche 1 bis 7, **dadurch gekennzeichnet, dass** die Abgasreinigungsvorrichtung einen Dieselpartikelfilter umfasst.

## Revendications

1. Agencement (1) contenant de l'énergie thermique pour un dispositif de purification de gaz d'échappement incorporé dans une conduite d'échappement (3) d'un moteur à combustion interne, le dispositif de purification ayant un orifice d'entrée (4) à travers lequel du gaz d'échappement du moteur à combustion interne peut entrer, et un orifice de sortie (5) à travers lequel le gaz d'échappement traité peut sortir, ledit agencement comportant un moyen contenant de l'énergie thermique amont rétractable situé en amont du dispositif de purification et un moyen contenant de l'énergie thermique aval rétractable situé en aval du dispositif de purification et un moyen d'actionnement pour commander la position dudit moyen contenant de l'énergie thermique amont et dudit moyen contenant de l'énergie thermique aval par rapport à l'orifice d'entrée (4) et à l'orifice de sortie (5) du dispositif de purification, respectivement, le moyen contenant de l'énergie thermique amont et le moyen contenant de l'énergie thermique aval pouvant être déplacés entre (i) une position de fonctionnement du moteur dans laquelle le moyen contenant de l'énergie thermique amont et le moyen contenant de l'énergie thermique aval sont dans une position au moins en partie rétractée et permettent l'écoulement de gaz d'échappement dans et hors du dispositif de purification de gaz d'échappement et (ii) une position préservant l'énergie thermique dans laquelle au moins l'un du moyen contenant de l'énergie thermique amont et du moyen contenant de l'énergie thermique aval ferment respectivement l'orifice d'entrée et l'orifice de sortie du dispositif de purification,
**caractérisé en ce que** l'agencement permet de restreindre l'orifice d'entrée et de sortie du convertisseur catalytique de telle sorte que l'écoulement des gaz d'échappement puisse être concentré sur une section restreinte du convertisseur catalytique.

2. Agencement selon la revendication 1, **caractérisé en ce que** l'un du moyen contenant de l'énergie thermique amont et du moyen contenant de l'énergie thermique aval comporte un cadre circulaire (8) qui supporte une série de lames rotatives (9) agencées en forme de diaphragme, qui peuvent fermer au moins en partie les orifices d'entrée et de sortie du dispositif de purification.

3. Agencement selon la revendication 2, **caractérisé en ce que** le cadre (8) supportant les lames rotatives (9) est engagé dans l'un des orifices d'entrée ou de sortie (4, 5).

4. Agencement selon l'une quelconque des revendications 1 à 3, **caractérisé en ce que** l'un du moyen contenant de l'énergie thermique amont et du moyen contenant de l'énergie thermique aval comporte une plaque rotative ayant une série d'ouvertures de diamètre croissant et au moins un secteur solide ayant une surface au moins égale à la section du dispositif de purification des gaz d'échappement, ladite plaque rotative étant positionnée angulairement entre (i) une position de fonctionnement du moteur dans laquelle l'une des ouvertures coïncide avec l'un des orifices d'entrée ou de sortie et (ii) une position préservant l'énergie thermique dans laquelle l'au moins un secteur solide recouvre l'un de l'orifice d'entrée ou de sortie du dispositif de purification.

5. Agencement selon l'une quelconque des revendications 1 à 4, **caractérisé en ce que** l'un du moyen contenant de l'énergie thermique amont et du moyen contenant de l'énergie thermique aval comporte une plaque solide ayant une surface au moins égale à la section du dispositif de purification des gaz d'échappement, la plaque solide étant déplaçable transversalement entre (i) une position de fonctionnement du moteur dans laquelle la plaque solide est dans une position rétractée et ouvre au moins en partie l'un des orifices d'entrée ou de sortie et (ii) une position préservant l'énergie thermique dans laquelle la plaque solide recouvre l'un des orifices d'entrée ou de sortie du dispositif de purification.

6. Agencement selon l'une quelconque des revendications 1 à 5, **caractérisé en ce que** les moyens contenant de l'énergie thermique sont constitués d'un noyau métallique revêtu d'une couche céramique.

7. Agencement selon l'une quelconque des revendications 1 à 6, **caractérisé en ce que** le dispositif de purification des gaz d'échappement comporte un convertisseur catalytique.

8. Agencement selon l'une quelconque des revendications 1 à 7, **caractérisé en ce que** le dispositif de purification des gaz d'échappement comporte un filtre à particules diesel.
